# EUROPEAN PATENT SPECIFICATION

(11) **EP 2 500 457 B1**
(45) Date of publication and mention of the grant of the patent: **26.11.2014**
(21) Application number: 10830071.6
(22) Date of filing: 14.01.2010
(51) Int. Cl.: D04H 13/00, D04H 1/14, D06M 15/564, D06M 15/55

(54) **FLAME RETARDANT MAT PLATE MATERIAL FOR CONSTRUCTION, AND PREPARATION METHOD THEREOF**
BAUPLATTENMATERIAL MIT FEUERFESTEN MATTEN UND HERSTELLUNGSVERFAHREN DAFÜR
MATERIAU DE PLAQUE DE NAPPE IGNIFUGEANT DESTINE A LA CONSTRUCTION, ET SON PROCEDE DE PREPARATION

(30) Priority: 10.11.2009 KR 20090107809
(43) Date of publication of application: 19.09.2012
(73) Proprietor: Na, Sung-Min, Gyeonggi-Do 472-010 (KR); G & G Co., Ltd, Gyeonggi-do 472-060 (KR)
(72) Inventor: NA, Sung-Min, Namyangju-City Gyeonggi-Do 472-010 (KR)
(74) Representative: Chapman, Patrick
(86) International application number: PCT/KR2010/000225
(87) International publication number: WO 2011/059138

(56) References cited:
- WO-A1-2007/018051
- JP-A- 6 313 250
- JP-A- 8 311 823
- JP-A- 60 103 104
- KR-A- 20030 095 484
- KR-A- 20060 067 282
- KR-Y1- 200 415 142

## Description

### Technical Field

The present invention relates to a flame retardant mat plate material for construction, and a preparation method thereof, and in particular to a mat plate which is characterized in that in a flame retardant mat plate for construction, a mat shaped plate is manufactured in such a way that a metallic thread made from an iron, a nonferrous metal, a waste can and a waste tin plate, etc. is tangled like a cotton wool in a thin sheet shape, so it is possible to recycle materials, and an inflammability can be enhanced, and a heat insulation effect can be maximized, and a recycling rate can be enhanced in terms of a material management, and the production of wastes can be advantageously minimized, thus contributing a lot to a green industry growth throughout the world.

### Background Art

A flame retardant mat plate for construction is generally made from asbestos, glass cotton, etc.

The asbestos is manufactured from ore, the production cost of which is low, and heat insulation and soundproof performance are excellent. So, the asbestos had been widely used since 1960s to 1970s.

The asbestos is generally classified as a top class cancer-causing substance which is produced in the course of demolishment of buildings, so the application of the asbestos is very restricted.

Alternatively, a glass cotton has been used for asbestos, which glass cotton is known as having excellent heat insulation and soundproof effects.

The above-described glass cotton costs a lot in terms of its manufacture, and recycling is impossible. In the course of its application, a worker's finger might be easily hurt with a piece of glass, which results in a lot of problems when in use.

The recycle of glass cotton is almost impossible, and a lot of wastes are produced in the course of demolishment of buildings.

The applicable scope of glass cotton is very limited because it is generally used as a heat insulation material or a soundproof material to be attached to a wall. Since a glass cotton per se does not have a support force enough to stably support a certain frame structure, and it cannot be also applied as a floor material.

### Disclosure of Invention

Accordingly, it is an object of the present invention to provide a flame retardant mat plate material for construction, and a preparation method thereof which can overcome the problems in a conventional art in which the price of a flame retardant mat plate for construction is high, and recycle is impossible, and a lot of construction wastes are produced, and its handling is risky.

To achieve the above objects, there is provided a flame retardant mat plate material for construction, and a preparation method thereof in which a mat shaped plate is manufactured in such a way that a mat shaped plate is manufactured as a metallic thread made from an iron, a nonferrous metal, a waste can and a waste tin plate, etc. is tangled like a cotton wool in a thin sheet shape.

### Advantageous effects

Therefore, the present invention is characterized in that a flame retardant mat plate for construction according to the present invention is made from a metallic thread from an iron, a nonferrous metal, a waste can, a waste tin plate, etc., so materials can be recycled, and inflammability, soundproof and heat insulation performances are maximized, and a recycling rate in the course of demolishment of buildings can be enhanced, and wastes are produced least, which all contribute to a green growth of the world.

### Brief Description of the Drawings

The present invention will become better understood with reference to the accompanying drawings which are given only by way of illustration and thus are not limitative of the present invention, wherein;
Figure 1 is a perspective view illustrating an embodiment of the present invention;
Figure 2 is a perspective view illustrating a protection sheet according to an embodiment of the present invention;
Figures 3 and 4 are side views illustrating a side view illustrating a hardening finishing layer according to an embodiment of the present invention;
Figure 5 is a perspective view illustrating an example that a metal mat is formed in a double layer structure according to an embodiment of the present invention;
Figures 6, 7 and 8 are views illustrating an example that a metallic mat is formed in a double layer structure with the aid of a plating engaging part according to an embodiment of the present invention;
Figures 9 and 10 are views illustrating an example that a metallic mat is formed in a double layer structure with the aid of a spot welding engaging part according to an embodiment of the present invention;
Figure 11 is a view illustrating an example that a metallic mat is formed in a double layer structure with the aid of a rivet engaging part according to an embodiment of the present invention;
Figure 12 is a view illustrating an example that a metallic mat is formed in a double layer structure with the aid of a hardening adhesive engaging part according to an embodiment of the present invention;
Figure 13 is a view illustrating an example of a single metallic thread-combined hardening adhesive engaging part according to an embodiment of the present invention;
Figure 14 is a view illustrating an example that a metallic mat is formed in a double layer structure with the aid of a hardening adhesive engaging part, and a hardening adhesive agent is formed of a circular diameter hardening adhesive agent according to an embodiment of the present invention; and
Figure 15 is a side cross sectional view illustrating a state that a resin is impregnated into the whole portions of a metallic mat according to an embodiment of the present invention.

### <Descriptions of reference numerals of the drawings>

1: metallic thread
10: metallic mat
11: protection sheet
12: hardening finishing layer
21: plating engaging part
21a: plating hole
22: stop welding engaging part
23: rivet engaging part
24: single metallic thread-combined hardening adhesive engaging part
25: circular diameter hardening adhesive agent
31: plating bathtub
32: positive electrode
33: negative electrode
34: plating metal
41: welding port
42: welding power supplier
43: rotary distributor

### Best modes for carrying out the invention

The preferred embodiment of the present invention will be described with reference to the accompanying drawings.

The present invention is basically directed to enhancing an inflammability and recycling performance in case of a flame retardant mat plate for construction.

The flame retardant mat plate for construction according to the present invention is characterized in that a metallic mat 10 is formed in such a way that a metallic thread made in a thin shape from an iron, a nonferrous metal, a waste can or a waste thin plate is tangled like a cotton wool or the like.

It is preferred that the metallic thread has 1~0.1 mm thickness which might help enhance a lightness and a heat insulation performance. It is preferred that an anticorrosion agent such as a zinc and urea resin, an epoxy resin, a cement or a gypsum is coated on an outer surface, thus preventing corrosion.

The coating of the anticorrosion agent is conducted on an outer surface of a metallic thread in the course of the manufacture of a metallic thread or a zinc and urea resin, an epoxy resin, a cement and a gypsum, and an anticorrosion agent is coated in a plating, a spray or an immersion fluid way following the manufacture of a metallic mat 10 with a metallic thread, so the metallic thread forming a metallic mat 10 is coagulated each other for thereby obtaining a durable construction.

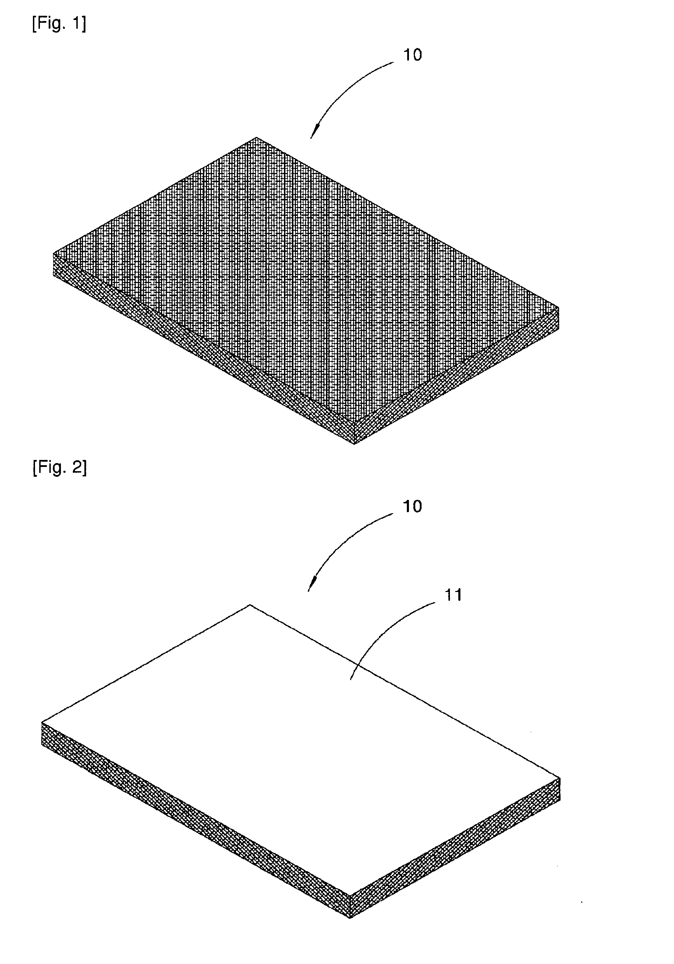

In the embodiment of the present invention, as shown in Figure 2, it is appreciated that a protection sheet 11 is attached at both sides of a metallic mat 10, thus preventing the inputs of foreign substances into the interior of a metallic cotton wool.

It is preferred that the protection sheet 11 is made from one among a metallic, thin sheet, an inflammable paper sheet and an inflammable woven cloth.

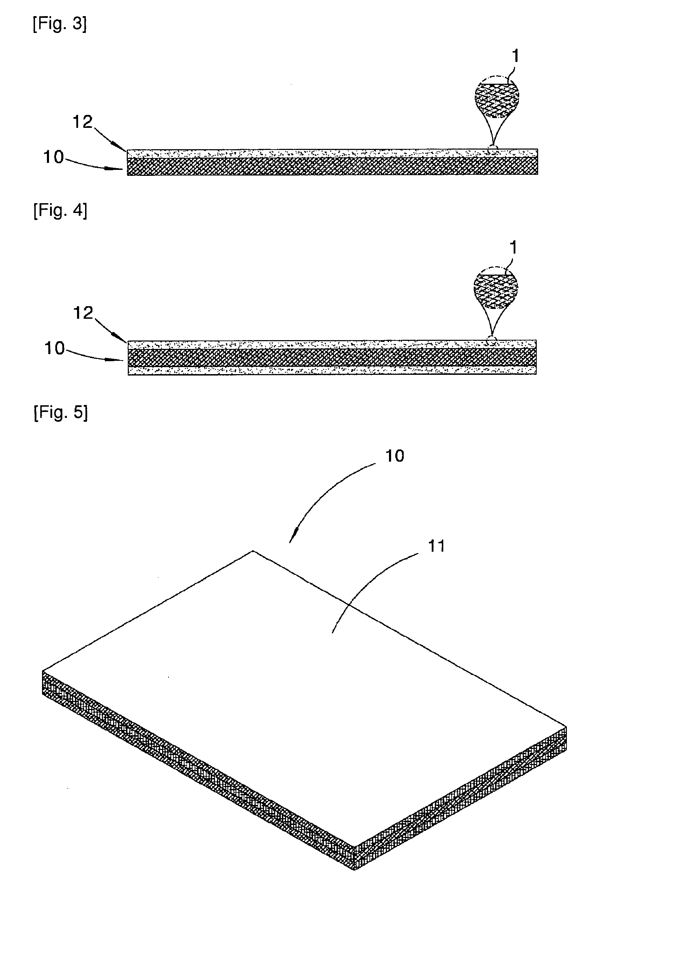

In the embodiment of the present invention, as shown in Figures 3 an 4, a hardening finishing agent is coated on at least one surface of the metallic mat 10, with the hardening finishing agent being made in such a way that a metallic thread is cut a certain length and impregnated and mixed with one hardening finishing paste selected among a hardening resin such as an urea resin and an epoxy resin and a hardening gypsum agent such as a cement and a gypsum, thus enhancing a durable hardening finishing layer 12.

It is appreciated that the metallic mat 10 might be formed in a double layer structure or preferably more structures with the aid of engaging members at least at two portions.

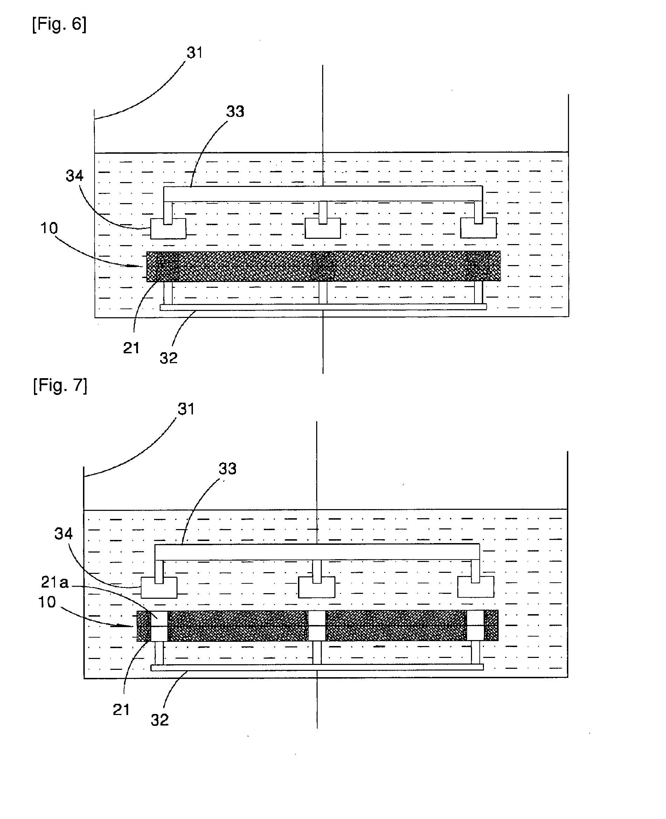

As shown in Figures 6 to 8, the engaging member might be a plated engaging part 21 in which a metallic thread is interconnected by means of a plating material in a plating method. The metallic mat is submerged in water in the plating bathtub 31, and the (-) electrode 33 is made to come into contact with the engaging portion, and the (+) electrode 32 engaged with the plating metal 34 is made to come close to the opposite side of the (-) electrode 33, thus forming a plating engaging part 21 at the engaging part through a concentrated plating.

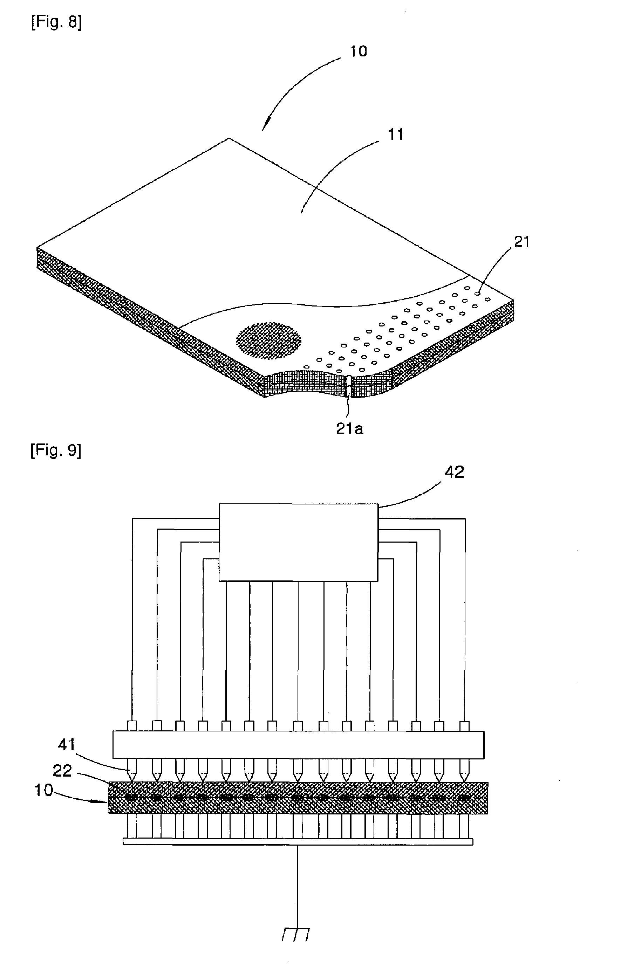

For a reliable, concentrated engaging work by means of the plating engaging part 21, as shown in Figures 7 and 8, a plating hole 21 a is formed at the plating engaging part 21 of the metallic mat 10, passing through the same. The plating engaging part 21 is formed at an inner wall of the plating hole 21 a.

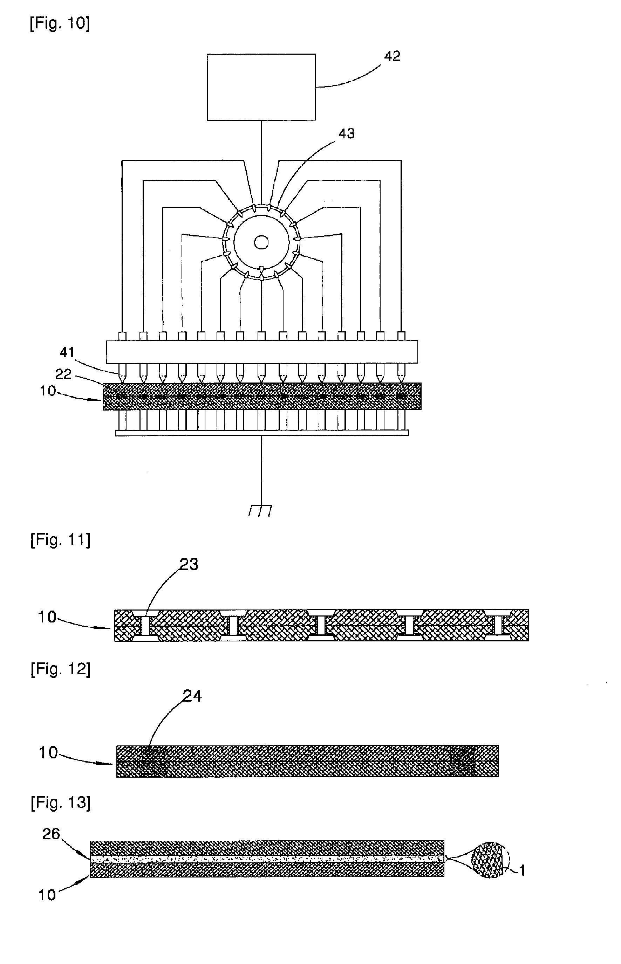

According to another example of the engaging member, as shown in Figures 9 and 10, a spot welding engaging part 22 can be formed so that the facing metallic threads are combined by a stop welding method. As shown in Figure 10, there are provided a plurality of welding ports 41, a welding power supplier 42 for supplying a high voltage power for the spot welding, and a rotary distributor 43 for sequentially distributing the electric power so as to prevent overload of the welding electric power supplier 42 owing to the concurrent power supply to the plurality of the welding ports 41, so welding works are sequentially performed.

According to another example of the engaging member, as shown in Figure 11, a rivet engaging part 23 might be implemented, in which engagement is performed with the aid of rivets. It is preferred that the rivets of the rivet engaging part 23 are eye rivets with each of its center being passed though.

According to another example of the engaging member, as shown in Figures 12 and 13, a hardening adhesive engaging part 24 might be formed of one hardening adhesive agent selected among a hardening resin adhesive agent such as an urea resin and an epoxy resin and a hardening gypsum adhesive agent such as a cement and a gypsum.

The hardening adhesive engaging part 24, as shown in Figure 12, might be implemented by partially inserting a hardening adhesive agent into the metallic mat 10 or as shown in Figure 13, a circular diameter hardening adhesive agent 25 made from a circular diameter hardening adhesive agent is impregnated during the manufacture of the metallic mat 10 and is pressed by a press machine, and the metallic thread of the metallic mat 10 to which the impregnated circular diameter hardening adhesive agent 25 is engaged is tangled with the circular diameter hardening adhesive agent 25.

According to another example of the engaging member, it might be tangled with a single metallic thread hardening adhesive agent 26 manufactured in such a manner that a metallic thread is cut and impregnated and mixed with one hardening adhesive paste selected among a hardening resin agent such as an urea resin and an epoxy resin and a hardening gypsum agent such as a cement and a gypsum.

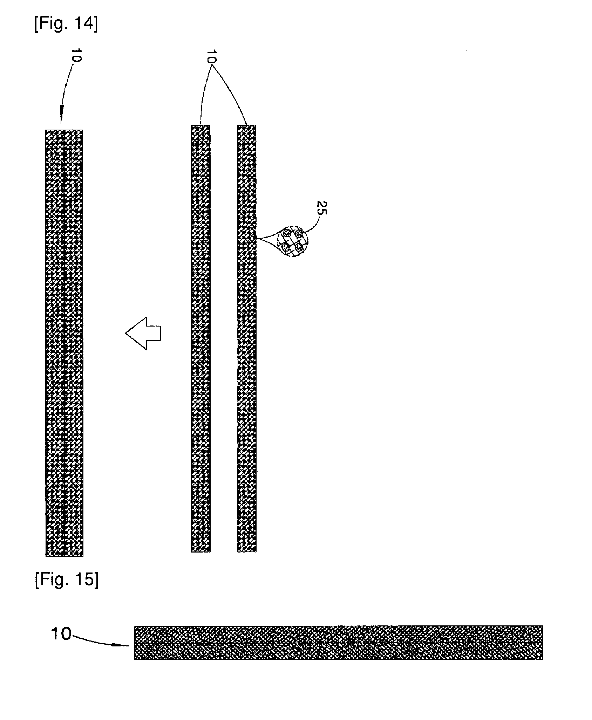

As shown in Figure 15, the metallic mat might be manufactured in such a way to combine and impregnate together a metallic thread and a hardening adhesive agent. In a double layer structure, the engagement can be down through the entire portions with resin. The adhesive agent can be injected with the aid of pressure from the lower side of the metallic mat 10 or alternatively, the metallic mat 10 can be inputted into a container filled with a hardening adhesive agent.

The operations of the present invention will be described.

As described above, in terms of the flame retardant mat plate for construction according to the present invention, a metallic thread made in a thin shape from a metallic material such as an iron, a nonferrous metal or the like is tangled like a cotton wool, thus manufacturing a metallic mat 10. The flame retardant mat plate for construction according to the present invention can be well applied to an interior material like a partition wall or the like or can be engaged into the interior of an exterior material like a soundproof wall, thus efficiently maintaining a soundproof function, a heat insulation function and an inflammable function.

The present invention uses a metallic wire, so an applicable range of material is very wide, and in case of a demolishment of buildings, a lot of wastes can be recycled without leaving any wastes behind.

Since the flame retardant mat plate for construction according to the present invention is made from a metallic material, it cannot be easily cut, and an intruder cannot easily break the flame retardant mat plate for construction for trespassing.

In the present invention, when a bigger porous is adapted without using a protection sheet, the flame retardant mat plate for construction according to the present invention can be used as a core material enhancing a strength of a concrete cast material of a building.

In the preferred embodiment of the present invention, the flame retardant mat plate for construction can be used as a finishing material at a partition wall when a hardening finishing layer 12 is formed at a metallic mat 10.

### Industrial applicability

Accordingly, the flame retardant mat plate for construction according to the present invention is made from a metallic thread, a recycling is promoted, and an inflammability, soundproof performance and heat insulation effect can be maximized.

In addition, it is appreciated that a recycling rate of materials produced in the course of a demolition of a building can be enhanced, and the producing amount of wastes can be minimized, which consequently contributes to a green industry growth throughout the world.

## Claims

1. A method for manufacturing a flame retardant mat plate material suitable to be used for construction, comprising:
a step of forming a metallic mat (10) in such a way that a metallic thread having a thickness of 1~0.1 mm is tangled with each other like a cotton wool,
wherein said metallic mat (10) is formed in a double layer structure,
the method further comprising:
engaging the double layer structure with the aid of an engaging means provided at at least two portions, said engaging means being selected from either:
(i) a spot welding engaging part (22) formed in such a way that facing metallic threads are engaged by means of spot welding; or
(ii) a rivet engaging part (23) in which engagement is performed by means of rivets.

2. A method for manufacturing a flame retardant mat plate material according to claim 1, wherein, in engagement means (i), spot welding is performed using a plurality of welding ports (41) and a welding electric power supplier (42) which serves to supply a high electric power for spot welding.

3. A method for manufacturing a flame retardant mat plate material according to claim 2, wherein a rotary distributor (43) is provided for sequentially distributing an electric power to the plurality of the welding ports (41).

4. A method for manufacturing a flame retardant mat plate material for construction according to any preceding claim, wherein the metallic mat is made in such a way to mix together the metallic thread with a hardening adhesive agent of either a hardening resin or a hardening gypsum agent.

5. A method for manufacturing a flame retardant mat plate material according to claim 4, wherein the hardening resin agent is selected from one of a urea resin and an epoxy resin or the hardening gypsum agent is selected from one of a cement and a gypsum.

6. A method for manufacturing a flame retardant mat plate material according to any preceding claim, the method further comprising:
attaching a protection sheet (11) to both sides of a metallic mat (10) in such a way to prevent the invasion of foreign substances, wherein the protection sheet (11) is made from one of: a metallic, thin sheet; an inflammable paper sheet; and an inflammable woven sheet; and
coating a hardening finishing agent on at least one surface of the metallic mat 10 to form a hardening finishing layer (12), wherein said hardening finishing agent is made by cutting a metallic thread to a certain length, and impregnating and mixing the metallic thread with a hardening finishing agent paste of either a hardening resin agent or a hardening gypsum agent.

## Patentansprüche

1. Verfahren zur Herstellung eines für den Einsatz beim Bauen geeigneten, flammenhemmenden Vliesplattenwerkstoffs, umfassend:
einen Schritt Formen eines Metallvlieses (10) derart, dass ein Metallfaden mit einer Dicke von 1~0,1 mm mit sich selbst wie Watte verfilzt wird,
wobei das Metallvlies (10) in einer Doppelschichtstruktur hergestellt wird,
wobei das Verfahren zudem umfasst:
Verbinden der Doppelschichtstruktur mithilfe einer Verbindungseinrichtung, die an mindestens zwei Stellen bereitgestellt ist, wobei die Verbindungseinrichtung ausgewählt ist aus:
(i) einem Punktschweißverbindungsteil (22), derart gestaltet, dass gegenüber liegende Metallfäden mithilfe von Punktschweißen verbunden werden, oder
(ii) einem Nietverbindungsteil (23), wobei das Verbinden mithilfe von Nieten erfolgt.

2. Verfahren zur Herstellung eines flammenhemmenden Vliesplattenwerkstoffs nach Anspruch 1, wobei bei Verbindungseinrichtung (i) Punktschweißen durchgeführt wird unter Verwendung einer Mehrzahl an Schweißöffnungen (41) und einer Schweißstromversorgung (42), die zum Zuführen von hoher elektrischer Energie für das Punktschweißen dient.

3. Verfahren zur Herstellung eines flammenhemmenden Vliesplattenwerkstoffs nach Anspruch 2, wobei ein Rundverteiler (43) bereitgestellt ist zum aufeinander folgenden Verteilen von elektrischer Energie an die Mehrzahl an Schweißöffnungen (41).

4. Verfahren zur Herstellung eines flammenhemmenden Vliesplattenwerkstoffs für den Bau nach einem vorhergehenden Anspruch, wobei das Metallvlies derart hergestellt wird, dass der Metallfaden mit einem härtenden Klebstoff aus entweder einem härtenden Harz- oder einem härtenden Gipsmittel gemischt wird.

5. Verfahren zur Herstellung eines flammenhemmenden Vliesplattenwerkstoffs nach Anspruch 4, wobei das härtende Harzmittel ausgewählt ist aus einem von einem Harnstoffharz und einem Epoxyharz oder das härtende Gipsmittel ausgewählt ist aus einem von einem Zement und einem Gips.

6. Verfahren zur Herstellung eines flammenhemmenden Vliesplattenwerkstoffs nach einem vorhergehenden Anspruch, wobei das Verfahren zudem umfasst:
Anbringen einer Schutzlage (11) auf beiden Seiten eines Metallvlieses (10) derart, dass das Eindringen fremder Substanzen verhindert wird, wobei die Schutzlage (11) aus einem der Folgenden besteht: einer metallischen dünnen Lage, einer brennbaren Papierlage und einer brennbaren gewirkten Lage, und Beschichten mindestens einer Oberfläche des Metallvlieses 10 mit einem härtenden Oberflächenausrüstungsmittel unter Bildung einer härtenden Oberflächenausrüstungsschicht (12), wobei das härtende Oberflächenausrüstungsmittel hergestellt wird durch Schneiden eines Metallfadens auf eine bestimmte Länge und Imprägnieren und Mischen des Metallfadens mit einer Oberflächenausrüstungsmittel-Paste aus entweder einem härtenden Harzmittel oder einem härtenden Gipsmittel.

## Revendications

1. Procédé de fabrication d'un matériau de plaque de nappe ignifugeant apte à être utilisé pour la construction, comprenant :
une étape consistant à former une nappe métallique (10) de telle manière qu'un filet métallique d'une épaisseur de 1 - 0,1 mm est emmêlé comme une laine de coton,
où ladite nappe métallique (10) est formé en une structure à couche double,
le procédé comprenant en outre :
mettre en prise la structure à couche double à l'aide d'un moyen d'engagement réalisé à au moins deux portions, ledit moyen d'engagement étant sélectionné parmi :
(i) une partie d'engagement de soudage par points (22) réalisée de telle manière que des fils métalliques se faisant face sont amenés en prise au moyen du soudage par points ; ou
(ii) une partie d'engagement à rivets (23) où la mise en prise est exécutée au moyen de rivets.

2. Procédé de fabrication d'un matériau de plaque de nappe ignifugeant selon la revendication 1, dans lequel, dans le moyen d'engagement (i), le soudage par points est exécuté en utilisant une pluralité de ports de soudage (41) et un fournisseur de puissance électrique de soudage (42) qui sert à fournir une puissance électrique élevée pour le soudage par points.

3. Procédé de fabrication d'un matériau de plaque de nappe ignifugeant selon la revendication 2, dans lequel un distributeur rotatif (43) est prévu pour distribuer séquentiellement une puissance électrique à la pluralité de ports de soudage (41).

4. Procédé de fabrication d'un matériau de plaque de nappe ignifugeant selon l'une quelconque des revendications précédentes, dans lequel la nappe métallique est réalisée de manière à mélanger ensemble le filet métallique avec un agent adhésif de durcissement soit d'une résine de durcissement soit d'un agent de gypse de durcissement.

5. Procédé de fabrication d'un matériau de plaque de nappe ignifugeant selon la revendication 4, dans lequel l'agent de résine de durcissement est sélectionné parmi une résine d'urée et une résine époxy, ou bien l'agent de gypse de durcissement est sélectionné parmi un d'un ciment et d'une gypse.

6. Procédé de fabrication d'un matériau de plaque de nappe ignifugeant selon l'une quelconque des revendications précédentes, le procédé comprenant en outre :
fixer une feuille de protection (11) aux deux côtés d'une nappe métallique (10) de manière à prévenir l'invasion de substances étrangères, où la feuille de protection (11) est réalisée parmi un de : une feuille métallique mince ; une feuille de papier inflammable et une feuille tissée inflammable ; et
appliquer un agent de finition de durcissement sur au moins une surface de la nappe métallique (10) pour former une couche de finition de durcissement (12), où ledit agent de finition de durcissement est réalisé en coupant un fil métallique à une certaine longueur, et en imprégnant et en mélangeant le fil métallique avec une pâte d'agent de finition de durcissement soit d'un agent de résine de durcissement soit d'un agent de gypse de durcissement.
